# EUROPÄISCHE PATENTSCHRIFT

(11) **EP 1 421 403 B1**
(45) Veröffentlichungstag und Bekanntmachung des Hinweises auf die Patenterteilung: **29.02.2012**
(21) Anmeldenummer: 02764528.2
(22) Anmeldetag: 18.07.2002
(51) Int. Cl.: G01S 7/481

(54) **OPTISCHE SENSORANORDNUNG**
OPTICAL SENSOR ARRANGEMENT
DISPOSITIF DE DETECTION OPTIQUE

(30) Priorität: 20.07.2001 DE 10135457
(43) Veröffentlichungstag der Anmeldung: 26.05.2004
(73) Patentinhaber: Automotive Distance Control Systems GmbH, 88131 Lindau (DE)
(72) Erfinder: HAGLEITNER, Walter, A-6900 Bregenz (AT); MEHR, Wilfried, 88131 Lindau (DE)
(74) Vertreter: Bobbert, Christiana
(86) Internationale Anmeldenummer: PCT/DE2002/002676
(87) Internationale Veröffentlichungsnummer: WO 2003/012471

(56) Entgegenhaltungen:
- DE-A- 4 115 747
- DE-A- 19 717 399
- US-A- 2 213 021
- US-A- 2 286 219
- US-A- 3 679 887
- US-A- 5 122 796
- US-A- 5 923 021

## Beschreibung

Die Erfindung betrifft eine optische Sensoranordnung gemäß dem Oberbegriff des Patentanspruchs 1.

Eine derartige Sensoranordnung ist beispielsweise aus der DE 41 15 747 C2 bekannt. Die bekannte Sensoranordnung umfasst eine Sende-Empfangs-Einrichtung mit einem Sendeteil zur Emission von Licht in einen Beobachtungsraum und einem Empfangsteil zur Detektion des im Beobachtungsraum reflektierten Lichts. Der wesentliche Nachteil dieser Sensoranordnung liegt darin, dass sie eine hohe Empfindlichkeit gegenüber störenden Umwelteinflüssen insbesondere gegenüber Feuchtigkeit und Verschmutzungen aufweist. Die Schrift DE 19717399A1 offenbart eine Sensoranordnung für ein Kraftfahrzeug zur Bestimmung von Abstand und Art von Objekte sowie der Sichtweite. Die Sensoranordnung ist hinter einer zur Beobachtungsrichtung geneigten Windschutzscheibe des Fahrzeugs angeordnet. Nachteilig an dieser Anordnung ist, dass vom Sensor emittiertes Licht an der geneigten Scheibe in den Fahrzeuginnenraum reflektiert wird und dadurch der Sensorbetrieb gestört werden kann.

Die Schrift US 2,213,021 offenbart einen Blendschutz für einen Fahrer eines Kraftfahrzeugs, um diesen vor Blendung durch Sonneneinstrahlung zu schützen. Die Schrift US3,679,887 zeigen einen Blendschutz vor einem beleuchteten Anzeigeinstrument in einem Kraftfahrzeug.

Der Erfindung liegt die Aufgabe zugrunde, eine optische Sensoranordnung gemäß dem Oberbegriff des Patentanspruchs 1 anzugeben, die eine hohe Betriebssicherheit und eine geringe Empfindlichkeit gegenüber Störeinflüssen aufweist.

Die Aufgabe wird durch die Merkmale des Patentanspruchs 1 gelöst. Vorteilhafte Ausgestaltungen und Weiterbildungen ergeben sich aus den weiteren Ansprüchen.

Erfindungsgemäß ist eine Abdeckung im Strahlengang des von der Sende-Empfangs-Einrichtung emittierten Lichts und des im Beobachtungsraum zur Sende-Empfangs-Einrichtung reflektierten Lichts vorgesehen, die für das emittierte und reflektierte Licht transparent ist. Die Sende-Empfangs-Einrichtung erfasst den Beobachtungsraum somit durch die Abdeckung und sie ist daher den Umwelteinflüssen nicht direkt ausgesetzt. Des weiteren ist zwischen der transparenten Abdeckung und der Sensoranordnung eine Blende vorgesehen, die in Richtung des emittierten und reflektierten Lichts ausgerichtete Lamellen aufweist. Durch die Blende wird verhindert, dass Licht, das von der Sende-Empfangs-Einrichtung emittiert wird, durch Reflexion an der transparenten Abdeckung zur Sende-Empfangs-Einrichtung zurückgelangt und dort vom Empfangsteil detektiert wird.

Vorzugsweise kommt die Sensoranordnung in einem Kraftfahrzeug zum Einsatz, wobei die Sende-Empfangs-Einrichtung hinter einer als transparente Abdeckung fungierenden Windschutzscheibe des Kraftfahrzeugs angeordnet ist.

Die erfindungsgemäße Sensoranordnung eignet sich bestens zur Realisierung von Vorrichtungen zur Objekterkennung, Abstandsermittlung oder Sichtweitenbestimmung, die in Kraftfahrzeugen in Systemen zur Fahrerunterstützung zum Einsatz kommen.

Ein Ausführungsbeispiel der Erfindung wird nachfolgend anhand von Figuren näher erläutert. Es zeigen:
- Figur 1: eine Seitenansicht der erfindungsgemäßen optischen Sensoranordnung,
- Figur 2: eine perspektivische Darstellung der Sensoranordnung aus Figur 1.

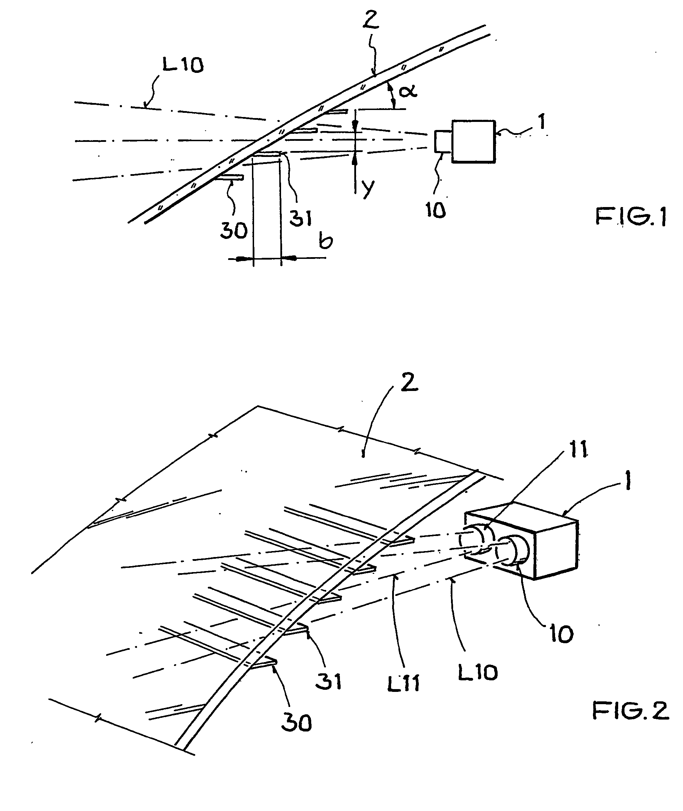

Gemäß Figur 1 umfasst die Sensoranordnung eine Sende-Empfangs-Einrichtung 1, die im Fahrerraum eines Kraftfahrzeugs hinter der Windschutzscheibe 2 angeordnet ist und die der optischen Erfassung eines vor dem Kraftfahrzeug befindlichen Beobachtungsraum dient. Die Windschutzscheibe 2 fungiert dabei als transparente Abdeckung, die die Sende-Empfang-Einrichtung 1 vor Umwelteinflüssen, insbesondere vor Feuchtigkeit und Verschmutzungen schützt.

Die Sende-Empfangsvorrichtung 1 weist einen Sendeteil 10 sowie einen neben dem Sendeteil 10 angeordneten Empfangsteil auf. In Figur 1 ist der Empfangsteil nicht dargestellt, da er sich in dieser Ansicht hinter dem Sendeteil 10 befindet und somit von diesem verdeckt ist. Der Sendeteil 10 ist zur Emission von Licht vorgesehen, das als Lichtstrahl L10 durch die Windschutzscheibe 2 in den Beobachtungsraum eindringt, an dort befindlichen Objekten reflektiert wird und als reflektiertes Licht durch die Windschutzscheibe 2 zum Empfangsteil gelangt und von diesem detektiert wird.

Das emittierte Licht L10 wird dabei vom Sendeteil 10 als moduliertes Licht ausgesendet, beispielsweise als gepulster Infrarot-Laserstrahl. Im Empfangsteil wird dann eine Demodulation vorgenommen, um Fremdlichtanteile, die nicht in der dem emittierten Licht L10 entsprechenden Weise moduliert sind und die somit mit dem emittierten Licht L10 nicht korreliert sind, zu unterdrücken.

Problematisch könnten an der Windschutzscheibe 2 auftretende Reflexionen sein. Ein Teil des emittierten Lichts L10 könnte so an der gegenüber der Beobachtungsrichtung geneigten Windschutzscheibe 2 in den Fahrzeuginnenraum reflektiert werden, dort an Objekten zur Windschutzscheibe 2 zurückreflektiert werden und an der Windschutzscheibe 2 zum Empfangsteil der Sende-Empfangs-Einrichtung 1 reflektiert werden. Die Auswertung dieses im Fahrzeuginnenraum reflektierten Lichts würde zu fehlerhaften Ergebnissen führen, da die Objekte, an denen das emittierte Licht im Fahrzeuginnenraum reflektiert wird, irrtümlich als im Beobachtungsraum befindliche Objekte angesehen werden könnten.

Um diese Probleme zu vermeiden ist an der Windschutzscheibe 2 an ihrer der Sende-Empfangs-Einrichtung 1 zugewandten Seite eine Blende mit lamellenförmiger Struktur vorgesehen. Die Lamellen 30, 31 der Blende sind dabei in Richtung des Strahlengangs des vom Sendeteil 10 in den Beobachtungsraum emittierten Lichts L10 und des vom Beobachtungsraum zum Empfangsteil reflektierten Lichts ausgerichtet, so dass das emittierte Licht L10 zwischen den Lamellen 30, 31 hindurch in den Beobachtungsraum gelangen kann und das dort reflektierte Licht zwischen den Lamellen 30, 31 hindurch zum Empfangsteil der Sende-Empfangs-Einrichtung 1 gelangen kann. Die Lamellen 30, 31 weisen jeweils eine vorgegebene Breite b auf, beispielsweise eine Breite von b = 1 cm, und sie sind jeweils um einen von der Breite b abhängigen Abstand y voneinander beabstandet. Das Verhältnis Breite b der Lamellen 30, 31 zu Abstand y der Lamellen 30, 31 beträgt dabei b/y = tan α wobei α den Neigungswinkel der Abdeckung 2 bezüglich den Lamellen 30, 31 darstellt.

Die Lamellen 30, 31 stellen für das im Inneren des Fahrzeugs an der Windschutzscheibe 2 reflektierte Licht ein Hindernis dar und bewirken somit eine Dämpfung der störenden Reflexionen im Inneren des Fahrzeugs. Zur Erhöhung der Dämpfungswirkung sind die Lamellen 30, 31 zudem lichtabsorbierend ausgeführt, was durch eine dunkle Farbe und eine matt ausgeführte Oberfläche bewirkt werden kann.

Figur 2 zeigt eine perspektivische Darstellung der Sensoranordnung aus Figur 1. In dieser Darstellung ist auch der neben dem Sendeteil 10 vorgesehene Empfangsteil 11 der Sende-Empfangs-Einrichtung 1 sowie der Strahlungsweg des vom Beobachtungsraum zum Empfangsteil 11 reflektierten Lichts L11 zu sehen.

Im vorliegenden Ausführungsbeispiel weist die Blende lediglich parallel zueinander liegende Lamellen 30, 31 auf. Denkbar sind aber auch gitterförmige Blenden, die sowohl parallel zueinander liegende Lamellen als auch quer zu diesen liegende Lamellen aufweisen.

Die vorliegende Sensoranordnung ist Teil eines Systems zur Unterstützung des Fahrers eines Kraftfahrzeugs. Bei dieser Anwendung besteht die Aufgabe der Sensoranordnung darin, die in Fahrtrichtung vor dem Kraftfahrzeug befindliche Szene abzutasten. Die hierdurch gewonnene Information wird dann in einer Signalverarbeitungseinrichtung weiterverarbeitet, mit dem Ziel, Objekte der Szene, insbesondere vorausfahrende Fahrzeuge, zu erkennen. Durch Auswertung der Signallaufzeit des emittierten und reflektierten Lichts ist dann der Abstand zwischen dem Kraftfahrzeug und einem vorausfahrenden Fahrzeug ermittelbar. Anhand des ermittelten Abstands kann anschließend geprüft werden, ob der Sicherheitsabstand zum vorausfahrenden Fahrzeug eingehalten wird und ggf. ein Warnsignal an den Fahrer abgegeben werden, oder es kann eine automatische Abstandsregelung des Abstands zum vorausfahrenden Fahrzeug vorgenommen werden. Die Sensoranordnung kann zudem zur Sichtweitenermittlung und zur Warnung des Fahrers, falls die Sichtweite für eine sichere Erkennung der für den Verkehr relevanten Objekte nicht ausreicht, eingesetzt werden. Die Sichtweitenermittlung beruht dabei auf der Auswertung der Signallaufzeit des in den Beobachtungsraum emittierten Lichts und des dort an Wassertröpfchen reflektierten Lichts.

## Patentansprüche

1. Optische Sensoranordnung für ein Kraftfahrzeug mit einer Sende-Empfangs-Einrichtung (1) zur Emission von Licht (L10) in Richtung eines Beobachtungsraums und zur Detektion des in Antwort auf das emittierte Licht im Beobachtungsraum reflektierten Lichts (L11), wobei
a) im Strahlengang des emittierten und reflektierten Lichts (L10, L11) eine für das emittierte und reflektierte Licht transparente Abdeckung (2) vorgesehen ist, die eine Windschutzscheibe eines Kraftfahrzeugs ist, und
b) die Windschutzscheibe (2) gegenüber einer Beobachtungsrichtung der Sensoranordnung geneigt ist
**dadurch gekennzeichnet, dass**
zwischen der transparenten Abdeckung (2) und der Sende-Empfangs-Einrichtung (1) eine Blende mit in Richtung des emittierten und reflektierten Lichts (L10, L11) ausgerichteten Lamellen (30, 31) vorgesehenen ist.

2. Sensoranordnung nach Anspruch 1, wobei die Breite (b)und der Abstand (y) der Lamellen (30,31) so bemessen sind, dass das Verhältnis Breite Abstand (b/y) dem Wert von tanα entspricht, wobei α den Neigungswinkel der Abdeckung (2) bezüglich den Lamellen (30,31) darstellt.

3. Verwendung der Sensoranordnung nach Anspruch 1 oder 2 in einem Fahrzeug zur Objekterkennung, Abstandsermittlung oder Sichtweitenbestimmung.

## Claims

1. Optical sensor arrangement for a motor vehicle with a transmitting-receiving device (1) for the emission of light (L10) towards an observed region and for the detection of the light (L11) reflected in the observed region in response to the emitted light, wherein
a) a cover (2) transparent for the emitted and reflected light (L10, L11) is provided in the beam path of the emitted and reflected light, said cover (2) being a windshield of a motor vehicle, and
b) the windshield (2) is inclined relative to an observation direction of the sensor arrangement,
**characterized in that**
a screen having blades (30, 31) oriented towards the emitted and reflected light (L10, L11) is provided between the transparent cover (2) and the transmitting-receiving device (1).

2. Sensor arrangement according to claim 1, wherein the width (b) and the distance (y) of the blades (30, 31) are dimensioned such that the width/distance ratio (b/y) corresponds to the value of tanα, wherein α represents the angle of inclination of the cover (2) with respect to the blades (30, 31).

3. Use of the sensor arrangement according to claim 1 or 2 in a vehicle for object detection, distance determination, or the determination of the range of vision.

## Revendications

1. Dispositif de détection optique pour un véhicule automobile avec un équipement d'émission-réception (1) pour l'émission de lumière (L10) en direction d'un espace d'observation et pour la détection de la lumière (L11) réfléchie dans l'espace d'observation en réponse à la lumière émise,
a) un recouvrement (2) transparent à la lumière émise et à la lumière réfléchie étant prévu sur le passage des rayons de la lumière émise et de la lumière réfléchie (L10, L11), ce recouvrement étant un parebrise d'un véhicule automobile, et
b) le parebrise (2) étant incliné par rapport à une direction d'observation du dispositif de détection,
**caractérisé en ce que**,
entre le recouvrement (2) transparent et l'équipement d'émission-réception (1), il est prévu un écran avec des lamelles (30, 31) orientées en direction de la lumière émise et de la lumière réfléchie (L10, L11).

2. Dispositif de détection selon la revendication 1, la largeur (b) et l'intervalle (y) des lamelles (30, 31) étant dimensionnés de sorte que le rapport largeur intervalle (b/y) correspond à la valeur de tanα, α représentant l'angle d'inclinaison du recouvrement (2) par rapport aux lamelles (30, 31).

3. Utilisation du dispositif de détection selon la revendication 1 ou 2 dans un véhicule pour la détection d'objets, pour la détermination d'intervalles ou pour la détermination de distance de visibilité.
